(19) Europäisches Patentamt
European Patent Office
Office européen des brevets

(11) **EP 0 749 088 B1**

(12) **FASCICULE DE BREVET EUROPEEN**

(45) Date de publication et mention
de la délivrance du brevet:
**28.08.2002 Bulletin 2002/35**

(51) Int Cl.$^7$: **G06K 13/08**

(21) Numéro de dépôt: **96401276.9**

(22) Date de dépôt: **12.06.1996**

(54) **Dispositif lecteur de carte à puce**

Chipkartenabtaster

Chip card reader

(84) Etats contractants désignés:
**BE DE GB IT NL**

(30) Priorité: **14.06.1995 FR 9507073**

(43) Date de publication de la demande:
**18.12.1996 Bulletin 1996/51**

(73) Titulaire: **FRAMATOME CONNECTORS
INTERNATIONAL
92400 Courbevoie (FR)**

(72) Inventeur: **Pernet, Michel
25300 Pontarlier (FR)**

(74) Mandataire: **Somnier, Jean-Louis et al
Novagraaf Technologies
122, rue Edouard Vaillant
92593 Levallois Perret Cedex (FR)**

(56) Documents cités:
**EP-A- 0 254 316       DE-A- 3 145 705
US-A- 4 803 349**

## Description

L'invention concerne un dispositif lecteur de carte à puce.

Dans le cadre de l'invention, le terme puce s'applique à tout type de microcircuit, monolithique ou hybride, intégré dans la carte, et dont les entrée/sorties sont connectées à des plages conductrices, affleurant en surface. Habituellement, la position de ces plages à la surface de la carte répondent à des normes : AFNOR, ISO, etc.

De même, le terme lecteur doit être compris dans son acceptation la plus générale. Ce terme englobe tout aussi bien la lecture proprement dite de données enregistrées dans la puce de la carte que l'écriture de données dans cette puce.

Les lecteurs de cartes à puce comportent généralement un cadre de lecture muni de balais et un dispositif de butée définissant le positionnement correct des plages de contact par rapport aux balais de lecture.

De nombreux systèmes d'introduction de cartes à puce sont connus : systèmes manuels, systèmes à volet, systèmes "avaleurs", du type de ceux utilisés dans les distributeurs de billets de banque ("DAB") ou guichets automatiques ("GAB").

L'invention concerne plus particulièrement un lecteur, du type à cadre mobile, pour lequel les opérations d'insertion et d'extraction de la carte dans le lecteur seront obtenues, toutes deux, par une seule et même action, à savoir une simple poussée sur la carte. On pourra qualifier ce lecteur par le terme anglo-saxon de "push-push".

Pour ce faire, le lecteur comprend un connecteur de carte intégrant, sur une épaisseur réduite, un dispositif d'insertion-extraction. Ce dernier fonctionne, comme il a été indiqué, uniquement par poussée sur la carte : une poussée pour l'insertion, une poussée pour l'extraction.

L'invention a donc pour objet un dispositif lecteur de carte à puce comprenant :

- un réceptacle guide carte comportant un orifice d'insertion de la carte à puce et un plateau fixe,
- des organes de type balais destinés à être mis en contact avec des plages conductrices déterminées de ladite carte quand celle-ci est insérée dans le lecteur,
- un chariot mobile recevant ladite carte et entraîné par celle-ci en translation suivant une direction déterminée à l'intérieur dudit réceptacle, parallèlement à la surface du plateau, lorsque l'on exerce une poussée sur la carte parallèlement à cette direction déterminée,
- un mécanisme comprenant des moyens formant ressort éjecteur de la carte et des moyens d'accrochage en fin de course du chariot mobile, lorsque la carte est entièrement insérée, ledit mécanisme étant conçu pour présenter deux états stables, à savoir un premier état verrouillé atteint lorsque l'on exerce une première poussée sur la carte jusqu'à l'insertion complète de celle-ci suivant ladite direction, et un second état déverrouillé atteint lorsqu'on exerce une seconde poussée suivant cette même direction et dans le même sens sur la carte entièrement insérée, cette seconde pression occasionnant l'extraction de celle-ci hors du lecteur sous l'effet des moyens formant ressort

Un tel dispositif est par exemple décrit dans la demande de brevet EP 0 254 316.

L'invention a pour but d'éviter tout risque de courts-circuits entre balais et/ou plages conductrices de la carte à puce ou de fonctionnement défectueux, lors du mouvement d'insertion de celle-ci.

L'invention parvient à résoudre ce problème grâce à un dispositif de ce type caractérisé en ce que lesdits moyens d'accrochage en fin de course comprennent une biellette reliée mécaniquement en une première extrémité audit chariot mobile par un axe autour duquel elle est mobile en rotation, la biellette étant pourvue sur une seconde extrémité d'un ergot destiné à suivre un chemin de guidage, et en ce que le chariot mobile est muni de moyens de ressort disposés de manière à exercer de part et d'autre de ladite biellette des forces sélectives et antagonistes, orthogonales à ladite direction déterminée, pour obliger l'ergot à parcourir ledit chemin de guidage dans un sens unique.

Dans une variante de l'invention, ce problème est également résolu par un dispositif de ce type dans lequel les organes de type balai définissent une première rangée de contacts disposés selon un premier axe orthogonal à ladite direction déterminée de déplacement du chariot mobile, et une seconde rangée de contacts disposés selon un second axe parallèle au premier axe.

Ce dispositif est caractérisé en ce que lesdits moyens d'accrochage en fin de course comprennent une biellette reliée mécaniquement en une première extrémité audit chariot mobile par un axe autour duquel elle est mobile en rotation, la biellette étant pourvue sur une seconde extrémité d'un ergot destiné à suivre un chemin de guidage, et en ce que, une surcourse d'une amplitude déterminée se produisant lors de l'introduction de ladite carte, ledit second axe est décalé suivant le sens d'introduction de celle-ci, de telle sorte que la distance entre les premier et second axes soit supérieure à l'entraxe desdites plages conductrices de la carte d'une valeur proportionnelle à ladite surcourse d'insertion.

L'invention sera mieux comprise et d'autres caractéristiques et avantages apparaîtront à la lecture de la description qui suit en référence aux figures annexées, et parmi lesquelles :

- La figure 1 est une vue générale illustrant un exemple de réalisation d'un dispositif lecteur de carte à puce selon l'invention ;

- La figure 2 illustre un chariot mobile utilisé dans le cadre du dispositif de la figure 1 ;
- Les figures 3a à 3c illustre une biellette entraînée par le chariot, respectivement en vue de dessus, de côté et de dessous ;
- la figure 4 illustre schématiquement les phases principales d'insertion et d'extraction d'une carte à puce dans un dispositif lecteur selon l'invention ;
- La figure 5 illustre un second mode de réalisation du dispositif selon l'invention ;
- La figure 5a est une figure de détail explicitant un point particulier de ce mode de réalisation ;
- La figure 6 illustre une disposition complémentaire permettant d'éviter les courts-circuits sur la carte à puce.

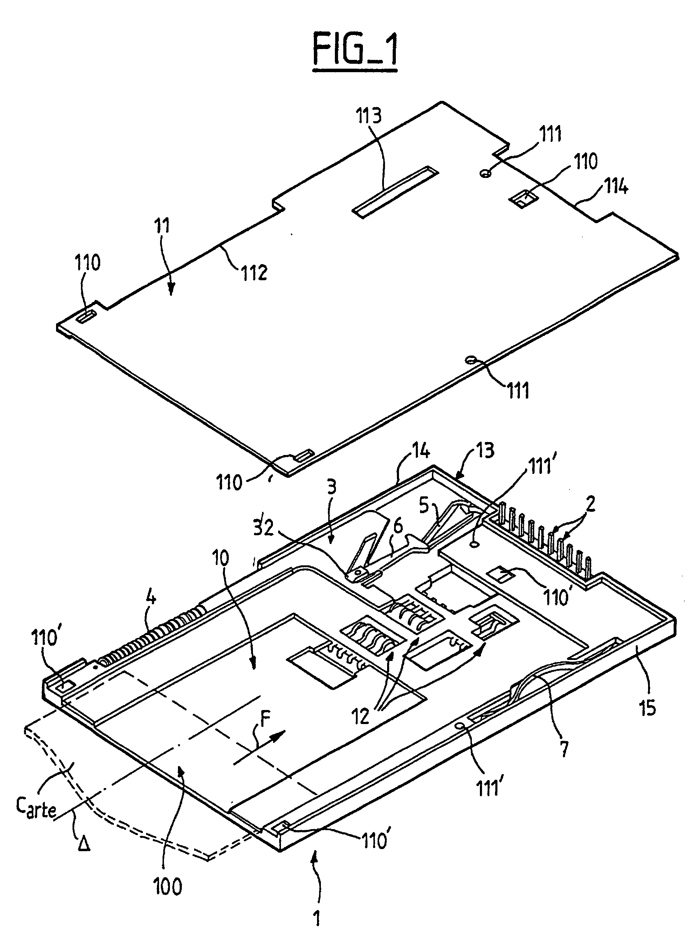

La figure 1 illustre un exemple de lecteur 1 de carte à puce $C_{arte}$ qui comprend un plateau 10, que l'on peut qualifier de fixe, et son couvercle 11, représentés démontés. L'ensemble forme un réceptacle pour la carte $C_{arte}$, de faible épaisseur et comportant une ouverture 100 en face avant permettant son insertion.

Le plateau 10 supporte les organes habituels à ce type de dispositif, notamment un jeu de balais 12 : contacts d'alimentation, de mise à la masse, d'entrée et de sortie de signaux et contacts de détection de fin de course. Le couvercle 11 et le plateau support 10 comportent également des organes de positionnement relatif, 110 et 110' respectivement, ainsi que des organes de fixation classique 111 et 111' respectivement. Des découpes, 112, 113 et 114, sont prévues dans le couvercle 11 de manière à laisser le chemin libre à différents organes : contacts classiques d'entrée-sortie de signaux 2, un ressort 4 et un curseur 32. Ces deux derniers organes seront décrits de façon plus détaillée ci-après.

Selon une caractéristique principale de l'invention, il est prévu un cadre mobile 3, entraîné par la carte $C_{arte}$ à lire et entraîné par celle-ci selon la direction repérée par la flèche "*F*", c'est-à-dire suivant l'axe longitudinal Δ du lecteur 1. Ce chariot mobile est rappelé par des moyens élastiques, par exemple par un ressort 4 solidaire du support 1.

Tel quel, le dispositif ne pourrait pas fonctionner correctement, car il est nécessaire que la carte $C_{arte}$, une fois insérée, soit retenue à l'intérieur du lecteur 1 jusqu'à ce qu'une action supplémentaire déclenche le processus d'extraction. En d'autres termes, il est nécessaire que le plateau mobile présente deux états stables, associés, respectivement, à l'insertion et à l'extraction complètes de la carte $C_{arte}$.

Pour ce faire, selon une autre caractéristique importante de l'invention, on associe au plateau mobile 3, un dispositif d'accrochage. Celui-ci est basé sur l'utilisation d'une biellette 6 munie d'un ergot. La biellette 6 est montée sur un axe du chariot 3 et l'ergot est guidé par un chemin de guidage 5 en forme de cardioïde désaxée par rapport à l'axe longitudinal Δ précité.

Ce chemin de guidage comporte, en son extrémité distale une aire de rétention de l'ergot.

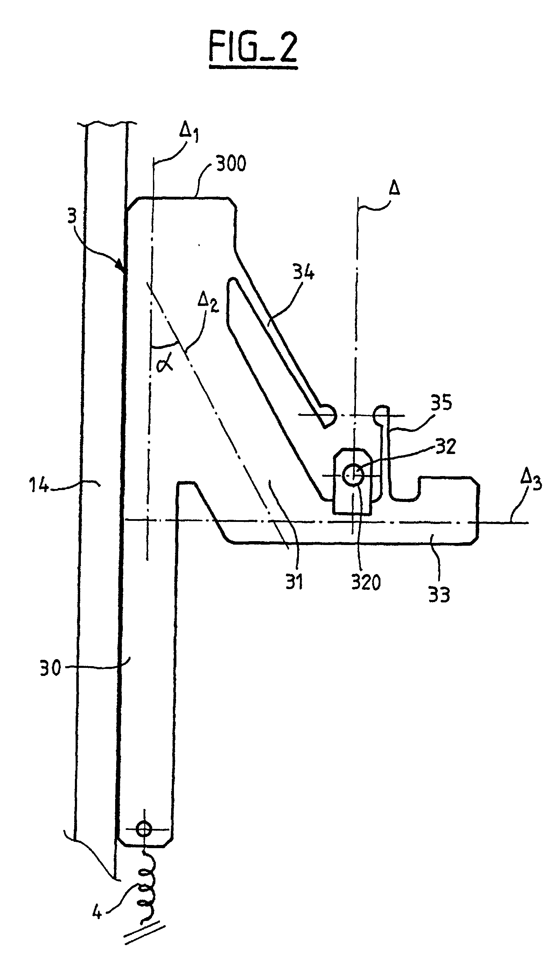

Le chariot mobile 3 est décrit de façon plus détaillée par la figure 2. Il comprend une partie allongée 30, prolongeant le ressort 4. Cette partie allongée 30 glisse, suivant une direction $\Delta_1$ parallèle à l'axe longitudinal Δ le long d'un des bords du plateau 10, en l'occurrence le bord gauche 14. Cette partie allongée 30 se prolonge, sur la droite et vers le bas (sur la figure 2) par une aile inclinée, de direction moyenne $\Delta_2$. Les axes $\Delta_1$ et $\Delta_2$ forment entre eux un angle aigu α. Typiquement, l'angle α est de l'ordre de 30°. Cette aile inclinée 31 se prolonge à son tour par une partie horizontale 33, c'est-à-dire de direction $\Delta_3$ orthogonale à l'axe Δ. Cette partie horizontale 33 formant butée pour l'extrémité de la Carte (figure 1), lorsque cette dernière est introduite dans le lecteur 1. Pour réaliser l'insertion de la carte $C_{arte}$, il est nécessaire d'exercer une force de pression pour vaincre la force antagoniste de rappel exercée par le ressort 4, qui croit au fur et à mesure du mouvement de translation du chariot mobile 3 vers le fond 13 (figure 1) du lecteur 1.

Si on considère de nouveau la figure 1, on constate que le chariot 3, et plus précisément sa partie horizontale 33, entraîne une biellette 6 dans son mouvement de translation suivant l'axe Δ.

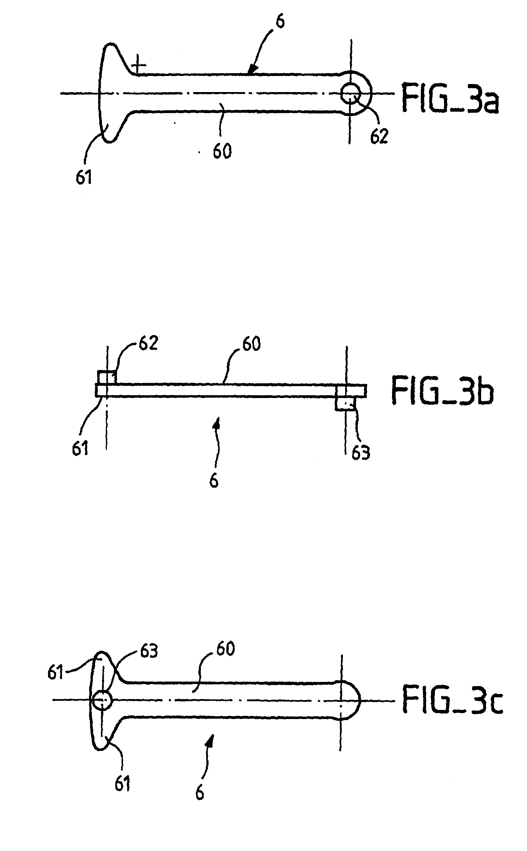

La biellette est décrite de façon plus détaillée en regard des figures 3a, 3b et 3c.

Sur la figure 3a, on a représenté la biellette 6 vue de haut. Elle comporte un corps allongé 60 muni d'une tête renflée 61 et à son autre extrémité d'un axe 62. Celui-ci est destiné à être inséré dans un orifice 320 réalisé dans le curseur 32 porté par la partie horizontale 33 du chariot 3.

Sur les figures 3b et 3c, représentant respectivement la biellette 6 en vue de côté et de dessous, on aperçoit un ergot 63, disposé sous la zone de tête 61. Cet ergot 63, avantageusement circulaire, est introduit dans le chemin de guidage 5 creusé dans le plateau 10 et suit ce chemin de guidage 5, lors du mouvement de translation du chariot mobile 3. Il s'ensuit que, la biellette 6 étant mobile en rotation autour de l'axe 62, le corps 60 de celle-ci s'incline par rapport à la direction de repos, sensiblement parallèle à l'axe Δ.

Comme il a été indiqué, le chemin de guidage 5 a la forme d'un cardioïde désaxé par rapport à l'axe longitudinal du Δ plateau 10, en l'occurrence vers la gauche dans l'exemple décrit.

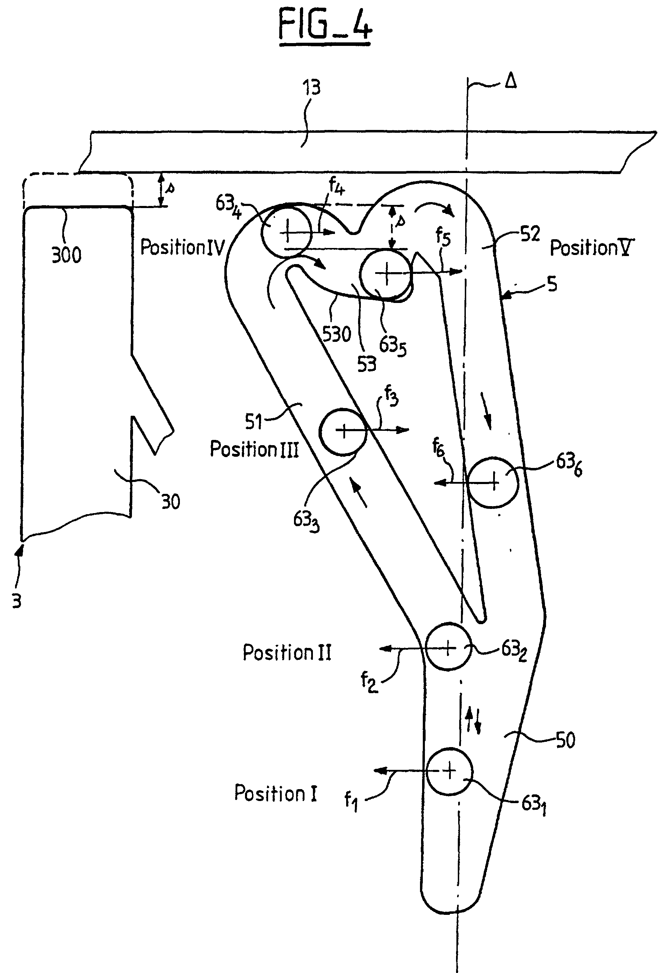

La figure 4 illustre schématiquement le fonctionnement du dispositif selon l'invention. On a représenté sur cette figure 4 les principales phases d'insertion et d'extraction de la carte $C_{arte}$ (figure 1). Ces phases sont référencées I à VI.

Il est nécessaire d'indiquer auparavant que, selon une autre caractéristique importante de l'invention, le chariot mobile est pourvu de deux moyens élastiques 34 et 35, par exemple des lames ressort, agissant sur la biellette 6. La première, 34, est portée par l'aile inclinée 31 du chariot 3. Sa direction moyenne est sensiblement la même que celle de l'aile 31 qui la porte, c'est-à-dire parallèle à l'axe $\Delta_2$. La seconde, 35, est portée par la partie horizontale 33 et s'étend suivant une direction orthogonale à l'axe $\Delta_3$, c'est-à-dire parallèle à l'axe $\Delta$.

La forme et les dimensions de ces lames ressorts, 34 et 35, compte-tenu des dimensions de la biellette 6, notamment de sa largeur, sont déterminées de manière à ce qu'elles centrent cette dernière sans subir de contrainte lorsque la carte $C_{arte}$ n'est pas insérée dans le lecteur 1.

Comme le montre la figure 4, le chemin de guidage 5, comporte quatre zones distinctes : une branche inférieure 50, sensiblement alignée sur l'axe $\Delta$, une branche latérale gauche 51, inclinée vers la gauche par rapport à cet axe, une zone supérieure 53, sensiblement horizontale, mais comportant toutefois en son centre une récession vers le bas, et une branche latérale droite également inclinée vers la gauche, par rapport à l'axe $\Delta$, bien que plus faiblement que la branche 51. On constate donc une dissymétrie de la figure de cardioïde, dissymétrie orientée (dans l'exemple décrit) vers la gauche.

C'est cette dissymétrie qui va obliger la biellette à toujours parcourir le chemin de guidage dans le même sens. En l'occurrence, compte-tenu du sens de la dissymétrie, l'ergot va parcourir le chemin de guidage dans le sens des aiguilles d'une montre.

La zone inférieure 50 du chemin de guidage 5 est commune aux étapes de verrouillage (insertion) de la carte $Ca_{rte}$ et de déverrouillage (extraction) de la carte $C_{arte}$. On a représenté deux phases, repérées I et II. Que ce soit à l'aller ou au retour, la biellette 6 (positions de l'ergot $63_1$ et $63_2$, respectivement) est sollicitée par la lame de ressort 35 qui exerce une force de pression vers la gauche : respectivement $f_1$ et $f_2$, pour les positions I et II. Ces forces maintiennent l'ergot 63 sur la paroi de gauche du chemin de guidage 5 : zone 50.

En particulier, lors de l'insertion de la carte $C_{arte}$, l'ergot va passer de la position $63_1$ (phase I) à la position $63_2$ (phase II), en glissant contre cette paroi. Si la pression exercée sur la carte $C_{arte}$ s'accentue, du fait de la force exercée par la lame de ressort 35 sur la biellette 6, l'ergot 63 bifurquera vers la branche de gauche 51 : position $63_3$ (phase III). A partir de l'entrée de l'ergot 63 dans cette branche 51, la biellette est soumise à une force de pression de la part de la lame de ressort 34, force dirigée vers la droite. Cette force augmente au fur et à mesure que l'ergot s'approche de l'extrémité supérieure de cette branche 51. Ensuite, dans son mouvement de translation vers la fond 13 du plateau 10, l'ergot 63 atteint la position $63_4$ (phase IV). Si on relâche la pression d'insertion de la carte $C_{arte}$ (suivant la flèche $F$ : figure 1), l'ergot 63 est entraîné vers la zone 53 (force $f_4$ vers la droite, exercée par la lame ressort 34), puis vers le fond 530 de cette zone, sous l'effet du ressort de rappel 4 et y reste coincé.

Un second état stable, ou état d'accrochage, est alors atteint, le premier état stable étant l'état de repos (position I) lorsque la carte $C_{arte}$ n'est pas insérée dans le lecteur 1.

Dans la position atteinte, la biellette 6, du fait de la dissymétrie de la cardioïde est toujours soumis à une force de pression vers la droite ($f_5$). Si on exerce de nouveau une force de pression sur la carte $C_{arte}$, dans le sens de la flèche $F$ (figure 1), suivant une direction parallèle à l'axe $\Delta$, l'ergot 63 va être poussé vers le fond 13. Puis, si on relâche de nouveau cette force de pression, la biellette 6 est entraînée en rotation vers la droite et l'ergot 63 vers la branche 52. le chariot 3 est alors rappelé par le ressort 4 et l'ergot 63 glisse vers le bas, le long de la branche 52 du chemin de guidage 5 : position $63_6$ (phase VI). A partir de cette position, la biellette 6 est de nouveau soumise à une force de pression vers la gauche, sous l'influence de la lame ressort 35. Enfin, l'ergot repasse dans la branche inférieure 50 (position $63_2$), jusqu'à sa position de repos (position $63_1$).

La branche 50 est donc commune aux actions de verrouillage et de déverrouillage. L'aiguillage, sans ambiguïté, de la branche 50 vers la branche 51, ou branche de verrouillage, est obtenu, du fait de la dissymétrie de la cardioïde, par l'action de la lame ressort 35. L'aiguillage, sans ambiguïté, de la branche supérieure 53 vers la branche 52, ou branche de déverrouillage, est obtenu, toujours du fait de la dissymétrie de la cardioïde, par l'action de la lame ressort 34.

Dans une variante de réalisation préférée de l'invention, le dispositif est associé à des moyens interdisant un fonctionnement défectueux, lors des opérations d'insertion et d'extraction de la carte $C_{arte}$.

En premier lieu les lames ressorts 34 et 35 associées au chariot mobile 3, limite la surcourse nécessaire pour atteindre la zone de maintien 53. Elles assurent de ce fait le centrage de la biellette 6 et interdisent tout risque de court-circuit des balais 12 (figure 1).

En deuxième lieu, le chariot mobile 3, dans sa partie supérieure (voir figures 2 et 4), comporte une butée 300 de fin de course. Celle-ci prend appui sur la partie arrière 13 du cadre support 10, position représentée en pointillé sur la figure 4, afin d'éviter une détérioration de la biellette en cas de poussée trop importante sur la carte $C_{arte}$. Le jeu maximum prévu, ou surcourse, est égal à "$s$", c'est également le jeu maximum entre la partie du chemin de guidage 5 la plus proche du fond 13 du plateau 10 et le haut de l'ergot 63 (en position d'accrochage $63_5$), dans le fond 530 de la branche 53.

Enfin, il est prévu un ressort supplémentaire 7, en l'occurrence solidaire du bord droit 15 du cadre 10. Celui-ci exerce une force de poussée, dirigée vers la gauche, qui maintient la carte $C_{arte}$ en pression latérale.

Selon un second mode de réalisation, il est possible d'omettre les lames ressorts (figure 2 : 34 et 35).

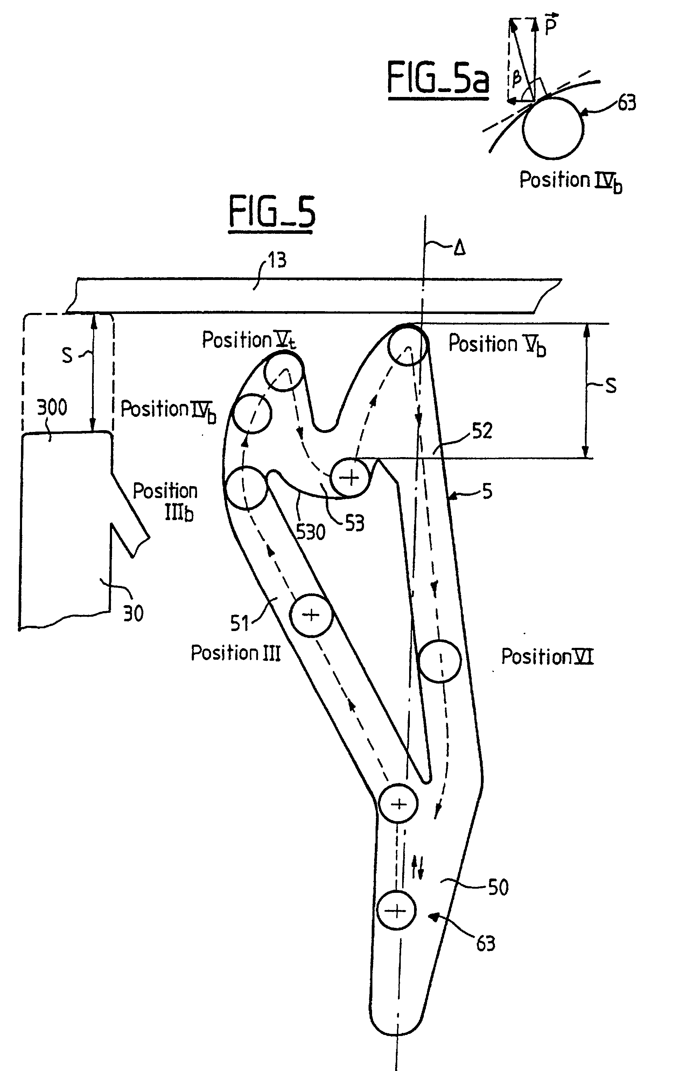

La figure 5 illustre schématiquement un dispositif selon ce second mode de réalisation et le parcourt de l'ergot 63 dans le chemin de guidage 5 : flèches en pointillé.

De la position I à la position III, le parcours est commun avec le cas précédent. Cependant, de la position $III_b$, c'est-à-dire légèrement en dessous du niveau du fond 530, l'ergot 63 passe directement à la position $IV_b$ contre le bord supérieur gauche de la branche 51, puisqu'il n'existe plus, dans ce cas, de force de rappel vers la droite. Ensuite, l'ergot 63 continue sa course vers le bord supérieur gauche de la zone supérieure de la cardioïde : position $V_t$, où il reste bloqué si l'on ne relâche pas l'effort de poussée sur la carte $C_{arte}$. Si la pression est relâchée, il retombe comme précédemment, au fond 530 de la branche supérieure 53 de la cardioïde : position V. Cette position V constitue un état stable. Ensuite, si une nouvelle poussée est exercée, l'ergot remonte vers le bord supérieur droit de la branche supérieure 53 de la cardioïde : position $V_b$, où il reste bloqué si l'on ne relâche pas l'effort de poussée sur la carte $C_{arte}$. Après relâchement de la force de poussée sur la carte, l'ergot suit la branche 52, comme précédemment : position VI, puis la branche commune 50 : position I.

Dans la zone supérieure de la cardioïde (de position $III_b$ à la position $IV_t$), pour que le mouvement s'effectue sans effort de poussée $\vec{P}$ excessive, il est nécessaire que l'angle de contact β entre l'ergot 63 et le bord de la piste, notamment au niveau de la position $IV_b$, soit relative faible et, donc, que l'arrondi de la cardioïde soit plus important que dans le cas précédent. La figure 5a illustre de façon plus détaillée cette condition.

Le même phénomène se reproduit sur la branche de droite.

En l'absence de ressort de rappel, il existe donc une surcourse "*S*" de "pousser-pousser" plus importante. Or le contact de fin de course doit se fermer normalement un peu avant que l'ergot ait atteint la position stable V, et rester dans cette position pendant toute cette surcourse "*S*".

En outre, les contacts balais 12 (figure 1) doivent rester, pendant ce mouvement, sur leurs plages de contacts électriques respectives.

Cependant, si l'on se réfère aux normes en vigueur, les plages peuvent être presque contiguës et leur largeur aussi petite que 2 mm.

Pour éviter un court-circuit entre balais, il est donc nécessaire de conserver une course "*S*" la plus réduite possible.

Il s'ensuit que la solution mettant en oeuvre des balais est préférable à la seconde solution. On peut atteindre une course typique de l'ordre de 1,4 mm.

On peut également éviter les court-circuits en adoptant des mesures particulières sur la position des balais 12.

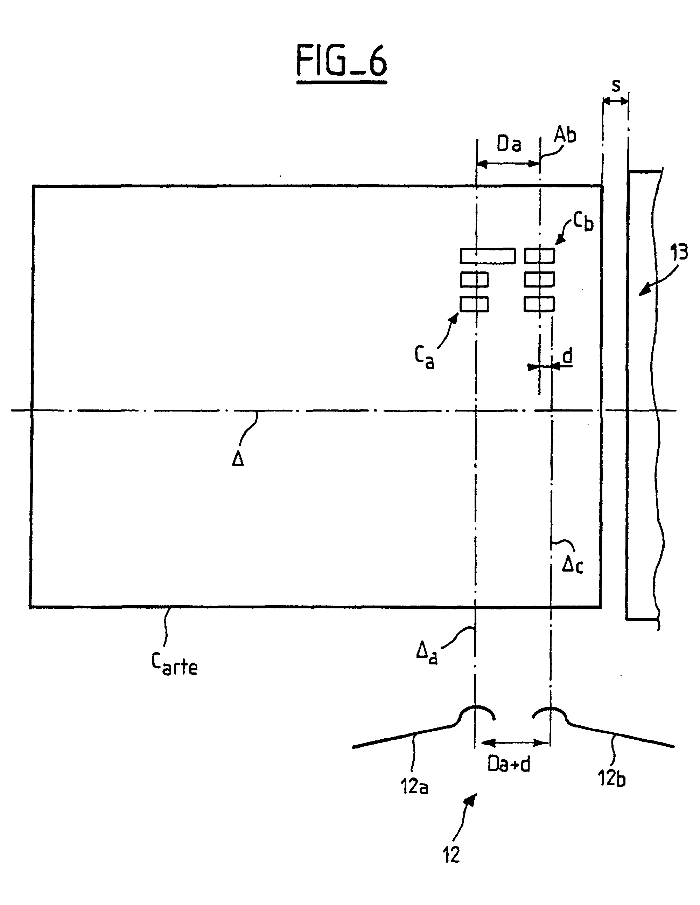

La figure 6 illustre schématiquement cette disposition.

On a représenté la carte $C_{arte}$ près du fond de butée 13 et l'amplitude de la surcourse s. Sur la surface supérieure de la carte $C_{arte}$, on a également représenté deux rangées de plages de contacts électriques, $C_a$ et $C_b$, affleurant en surface. Ces deux rangées sont alignées sur deux axes parallèles, $\Delta_a$ et $\Delta_b$, respectivement. La distance "*Da*" entre ces deux axes, $\Delta_a$ et $\Delta_b$, représente l'entraxe moyen (compte tenu que l'un des contacts de la rangée $C_a$ est plus long que les autres) des plages de contacts électriques, $C_a$ et $C_b$.

Les axes $\Delta_a$ et $\Delta_b$ sont sensiblement orthogonaux à l'axe $\Delta$ ou direction d'insertion de la carte $C_{arte}$.

Les balais $12_a$ et $12_b$ destinés à entrer en contact avec les plages conductrices des rangées, $C_a$ et $C_b$, respectivement, sont alignés sur deux axes parallèles : l'axe $\Delta_a$ précité et un axe $\Delta_c$.

Pour éviter les courts-circuits, selon un aspect complémentaire de l'invention, on décale les balais $12_b$, destinés à entrer en contact avec les plages de contacts de la rangée $C_b$, d'une valeur "*d*", dans le sens de l'insertion, de telle sorte que la distance séparant l'axe $\Delta a$ de l'axe $\Delta c$ soit supérieure à l'entraxe "*Da*" des plages conductrices de la carte $C_{arte}$ d'une valeur "*d*" proportionnelle à la surcourse d'insertion "*s*". Cette distance est donc égale à "*Da+d*".

De façon préférentielle, la valeur "*d*" est sensiblement égale à la moitié de l'amplitude de la surcourse "*s*".

La disposition qui vient d'être décrite s'applique tout aussi bien au dispositif selon le premier mode de réalisation (figure 4) qu'au dispositif selon le second mode de réalisation (figure 5).

A la lecture de ce qui précède, on constate aisément que l'invention atteint bien les buts qu'elle s'est fixés.

## Revendications

1. Dispositif lecteur de carte à puce comprenant :

   - un réceptacle guide carte comportant un orifice (100) d'insertion de la carte à puce ($C_{arte}$) et un plateau fixe (10),
   - des organes de type balais (12) destinés à être mis en contact avec des plages conductrices déterminées ($C_a$, $C_b$) de ladite carte ($C_{arte}$) quand celle-ci est insérée dans le lecteur (1),
   - un chariot mobile (3) recevant ladite carte ($C_{arte}$) et entraîné par celle-ci en translation suivant une direction déterminée ($\Delta$) à l'intérieur dudit réceptacle, parallèlement à la surface du plateau (10), lorsque l'on exerce une poussée sur la carte ($C_{arte}$) parallèlement à cette direction déterminée ($\Delta$),
   - un mécanisme comprenant des moyens (4) formant ressort éjecteur de la carte ($C_{arte}$) et des moyens d'accrochage en fin de course (5, 6) du chariot mobile (3), lorsque la carte ($C_{arte}$) est entièrement insérée, ledit mécanisme étant conçu pour présenter deux états stables, à savoir un premier état verrouillé atteint lorsque l'on exerce une première poussée sur la carte ($C_{arte}$) jusqu'à l'insertion complète de celle-ci suivant ladite direction ($\Delta$), et un second état déverrouillé atteint lorsqu'on exerce une seconde poussée suivant cette même direction ($\Delta$) et dans le même sens sur la carte ($C_{arte}$) entièrement insérée, cette seconde pression occasionnant l'extraction de celle-ci hors du lecteur (1) sous l'effet des moyens (4) formant ressort,

**caractérisé en ce que** lesdits moyens d'accrochage en fin de course comprennent une biellette (6) reliée mécaniquement en une première extrémité audit chariot mobile (3) par un axe (62) autour duquel elle est mobile en rotation, la biellette étant pourvue sur une seconde extrémité d'un ergot (63) destiné à suivre un chemin de guidage (5), et **en ce que** le chariot mobile (3) est muni de moyens de ressort (34, 35) disposés de manière à exercer de part et d'autre de ladite biellette (6) des forces sélectives et antagonistes, orthogonales à ladite direction déterminée ($\Delta$), pour obliger l'ergot (63) à parcourir ledit chemin de guidage (5) dans un sens unique.

2. Dispositif lecteur de carte à puce comprenant :

- un réceptacle guide carte comportant un orifice (100) d'insertion de la carte à puce ($C_{arte}$) et un plateau fixe (10),
- des organes de type balai (12) destinés à être mis en contact avec des plages conductrices déterminées ($C_a$, $C_b$) de ladite carte ($C_{arte}$) quand celle-ci est insérée dans le lecteur (1), lesdits organes de type balai (12) définissant une première rangée de contacts ($12_a$) disposés selon un premier axe orthogonal ($\Delta_a$) à ladite direction déterminée ($\Delta$) de déplacement du chariot mobile (3), et une seconde rangée de contacts ($12_b$) disposés selon un second axe ($\Delta_c$) parallèle au premier axe ($\Delta_a$),
- un chariot mobile (3) recevant ladite carte ($C_{arte}$) et entraîné par celle-ci en translation suivant une direction déterminée ($\Delta$) à l'intérieur dudit réceptacle, parallèlement à la surface du plateau (10), lorsque l'on exerce une poussée sur la carte ($C_{arte}$) parallèlement à cette direction déterminée ($\Delta$),
- un mécanisme comprenant des moyens (4) formant ressort éjecteur de la carte ($C_{arte}$) et des moyens d'accrochage en fin de course (5, 6) du chariot mobile (3), lorsque la carte ($C_{arte}$) est entièrement insérée, ledit mécanisme présentant deux états stables, à savoir un premier état verrouillé atteint lorsque l'on exerce une première poussée sur la carte ($C_{arte}$) suivant ladite direction ($\Delta$), jusqu'à son insertion complète, et un second état déverrouillé atteint lorsqu'on exerce une seconde poussée sur la carte ($C_{arte}$) entièrement insérée, suivant cette même direction ($\Delta$) et dans le même sens, cette seconde pression occasionnant l'extraction de celle-ci hors du lecteur (1) sous l'effet des moyens (4) formant ressort,

**caractérisé en ce que** lesdits moyens d'accrochage en fin de course comprennent une biellette (6) reliée mécaniquement en une première extrémité audit chariot mobile (3) par un axe (62) autour duquel elle est mobile en rotation, la biellette étant pourvue sur une seconde extrémité d'un ergot (63) destiné à suivre un chemin de guidage (5), et **en ce que**, une surcourse d'une amplitude déterminée "$s$" se produisant lors de l'introduction de ladite carte ($C_{arte}$), ledit second axe ($\Delta_c$) est décalé suivant le sens d'introduction de celle-ci, de telle sorte que la distance "$Da+d$" entre les premier et second axes soit supérieure à l'entraxe "$Da$" desdites plages conductrices ($C_a$, $C_b$) de la carte ($C_{arte}$) d'une valeur "$d$" proportionnelle à ladite surcourse d'insertion "$s$".

3. Dispositif selon la revendication 2, **caractérisé en ce que** ladite valeur "$d$" est sensiblement égale à la moitié de ladite surcourse "$s$" d'insertion de la carte ($C_{arte}$).

4. Dispositif selon l'une des revendications 1 à 3, **caractérisé en ce que** ledit chemin de guidage (5) a la forme d'une cardioïde possédant, dans une zone proche dudit axe (62), une première branche (50), sensiblement parallèle à ladite direction déterminée ($\Delta$), se divisant en des première et seconde branches latérales (51, 52), faiblement inclinées par rapport à cette même direction déterminée ($\Delta$), et, dans une zone distale, une branche (53) réunissant les deux branches latérales (51, 52) et possédant une zone de maintien (530) en retrait, de manière à ce que ledit ergot (63) s'accroche dans cette zone (530) lors de l'insertion complète de ladite carte ($C_{arte}$) et à ce que ledit mécanisme à deux états stables présente le premier état dit verrouillé.

5. Dispositif selon la revendication 4, **caractérisé en ce que**, lorsqu'une première poussée occasionne l'insertion de ladite carte ($C_{arte}$), ledit ergot (63) parcourt ladite première branche (50), puis l'une (51) desdites banches latérales et se positionne dans ladite zone de maintien (530), en retrait de la branche (53) située dans la zone distale, de manière à ce que ledit mécanisme à deux états stables atteigne le premier état verrouillé, et **en ce que**, lorsqu'une seconde poussée occasionne l'extraction de ladite

carte (C$_{arte}$), ledit ergot (63) se dégage de cette zone de maintien (530) et parcourt la seconde branche latérale (52) et, de nouveau, ladite première branche (50), en sens inverse, jusqu'à ce que ledit mécanisme à deux états stables atteigne le second état déverrouillé.

6. Dispositif selon la revendication 4 ou 5, **caractérisé en ce que** lesdites lames ressorts (34, 35), disposées de part et d'autre de ladite biellette (6), sont agencées de telle sorte que, lorsque ledit ergot (63) est positionné dans ladite zone de maintien (530), en retrait de la branche (53) située dans la zone distale, elles assurent, via la biellette (6), un positionnement correct dudit chariot (6) et de la carte (C$_{arte}$) supportée par celui-ci, par rapport auxdits balais (12), de manière à éviter des risques de courts-circuits.

7. Dispositif selon l'une quelconque des revendications 1 à 6, **caractérisé en ce que** ledit plateau (10) est en outre muni d'un ressort à lame supplémentaire (7) de maintien latéral de ladite carte (C$_{arte}$).

8. Dispositif selon l'une quelconque des revendications 1 à 7, **caractérisé en ce que** ledit chariot mobile (3) comporte en outre une butée de fin de course (300) prenant appui sur une zone déterminée (13) dudit plateau fixe (10), de manière à limiter l'amplitude du mouvement du chariot mobile (3) et à éviter une détérioration de ladite biellette (6).

9. Dispositif selon l'une quelconque des revendications 1 à 8, **caractérisé en ce que** lesdits moyens formant ressort éjecteur sont constitués par un ressort à boudin (4) dont l'une extrémité est solidaire dudit réceptacle (10) et l'autre extrémité est solidaire dudit chariot mobile (3).

**Patentansprüche**

1. Chipkarten-Lesevorrichtung, die aufweist:

   - einen kartenführenden Behälter mit einer Einführöffnung (100) für die Chipkarte (C$_{arte}$) und einer ortsfesten Platte (10),
   - Organe der Art Schleifkontakt (12), die mit bestimmten leitenden Bereichen (C$_a$, C$_b$) der Karte (C$_{arte}$) in Kontakt gebracht werden, wenn diese in das Lesegerät (1) eingeführt ist,
   - einen beweglichen Wagen (3), der die Karte (C$_{arte}$) aufnimmt und von dieser in Translationsrichtung gemäß einer bestimmten Richtung ($\Delta$) parallel zur Oberfläche der Platte (10) ins Innere des Behälters angetrieben wird, wenn ein Druck auf die Karte (C$_{arte}$) parallel zu dieser bestimmten Richtung ($\Delta$) ausgeübt wird,

   - einen Mechanismus mit Mitteln (4), die eine Auswerffeder für die Karte (C$_{arte}$) bilden, und mit Mitteln (5, 6) zum Einrasten des beweglichen Wagens (3) in der Endstellung, wenn die Karte (C$_{arte}$) vollständig eingeführt ist, wobei der Mechanismus ausgebildet ist, um zwei stabile Zustände aufzuweisen, d.h. einen ersten, verriegelten Zustand, der erreicht wird, wenn ein erster Druck in der Richtung ($\Delta$) auf die Karte (C$_{arte}$) bis zur ihrer vollständigen Einführung ausgeübt wird, und einen zweiten, entriegelten Zustand, der erreicht wird, wenn ein zweiter Druck in dieser gleichen Richtung ($\Delta$) und mit gleicher Ausrichtung auf die vollständig eingeführte Karte (C$_{arte}$) ausgeübt wird, wobei dieser zweite Druck unter der Wirkung von federbildenden Mitteln (4) das Herausziehen der Karte aus dem Lesegerät (1) bewirkt,

   **dadurch gekennzeichnet, daß** die Mittel zum Einrasten in der Endstellung einen Schwingarm (6) aufweisen, der an einem ersten Ende über eine Achse (62), um die er drehbeweglich ist, mechanisch mit dem beweglichen Wagen (3) verbunden ist, wobei der Schwingarm an einem zweiten Ende mit einem Zapfen (63) versehen ist, der einem Führungsweg (5) folgt, und daß der bewegliche Wagen (3) mit Federmitteln (34, 35) versehen ist, die so angeordnet sind, daß sie zu beiden Seiten des Schwingarms (6) selektive und entgegengesetzt wirkende Kräfte senkrecht zur bestimmten Richtung ($\Delta$) ausüben, um den Zapfen (63) zu zwingen, den Führungsweg (5) in einer einzigen Richtung zu durchlaufen.

2. Chipkarten-Lesevorrichtung, die aufweist:

   - einen kartenführenden Behälter mit einer Einführöffnung (100) für die Chipkarte (C$_{arte}$) und einer ortsfesten Platte (10),
   - Organe der Art Schleifkontakt (12), die mit bestimmten leitenden Bereichen (C$_a$, C$_b$) der Karte (C$_{arte}$) in Kontakt gebracht werden, wenn diese in das Lesegerät (1) eingeführt ist, wobei die Organe der Art Schleifkontakt (12) eine erste Reihe von Kontakten (12$_a$), die gemäß einer ersten Achse ($\Delta_a$) senkrecht zur bestimmten Verschieberichtung ($\Delta$) des beweglichen Wagens (3) angeordnet sind, und eine zweite Reihe von Kontakten (12$_b$) definieren, die gemäß einer zweiten Achse ($\Delta_c$) parallel zur ersten Achse ($\Delta_a$) angeordnet sind,
   - einen beweglichen Wagen (3), der die Karte (C$_{arte}$) aufnimmt und von dieser in Translationsrichtung gemäß einer bestimmten Richtung ($\Delta$) parallel zur Oberfläche der Platte (10) ins Innere des Behälters angetrieben wird, wenn ein Druck auf die Karte (C$_{arte}$) parallel zu dieser be-

stimmten Richtung (Δ) ausgeübt wird,

- einen Mechanismus mit Mitteln (4), die eine Auswerffeder für die Karte (C_arte) bilden, und mit Mitteln (5, 6) zum Einrasten des beweglichen Wagens (3) in der Endstellung, wenn die Karte (C_arte) vollständig eingeführt ist, wobei der Mechanismus zwei stabile Zustände aufweist, d.h. einen ersten, verriegelten Zustand, der erreicht wird, wenn ein erster Druck in der Richtung (Δ) auf die Karte (C_arte) bis zur ihrer vollständigen Einführung ausgeübt wird, und einen zweiten entriegelten Zustand, der erreicht wird, wenn ein zweiter Druck in dieser gleichen Richtung (Δ) und mit gleicher Ausrichtung auf die vollständig eingeführte Karte (C_arte) ausgeübt wird, wobei dieser zweite Druck unter der Wirkung von federbildenden Mitteln (4) das Herausziehen der Karte aus dem Lesegerät (1) bewirkt,

**dadurch gekennzeichnet, daß** die Mittel zum Einrasten in der Endstellung einen Schwingarm (6) aufweisen, der an einem ersten Ende über eine Achse (62), um die er drehbeweglich ist, mechanisch mit dem beweglichen Wagen (3) verbunden ist, wobei der Schwingarm an einem zweiten Ende mit einem Zapfen (63) versehen ist, der einem Führungsweg (5) folgt, und daß, da ein Überweg einer bestimmten Amplitude "*s*" bei der Einführung der Karte (C_arte) entsteht, die zweite Achse (Δ_c) gemäß deren Einführrichtung verschoben wird, so daß der Abstand *"Da-a"* zwischen der ersten und der zweiten Achse um einen Wert *"d"* proportional zum Einfuhr-Überweg *"s"* größer ist als der Achsabstand *"Da"* der leitenden Bereiche (C_a, C_b) der Karte (C_arte).

3. Vorrichtung nach Anspruch 2, **dadurch gekennzeichnet, daß** der Wert "*d*" im wesentlichen gleich der Hälfte des Einführ-Überwegs "*s*" der Karte (C_arte) ist.

4. Vorrichtung nach einem der Ansprüche 1 bis 3, **dadurch gekennzeichnet, daß** der Führungsweg (5) die Form einer Herzkurve aufweist, die in einem Bereich nahe der Achse (62) einen ersten Zweig (50) im wesentlichen parallel zu der bestimmten Richtung (Δ), der sich in einen ersten und einen zweiten seitlichen Zweig (51, 52) aufteilt, die in bezug auf diese bestimmte Richtung (Δ) geringfügig geneigt sind, und in einem fernen Bereich einen Zweig (53) besitzt, der die beiden seitlichen Zweige (51, 52) vereint und einen vertieften Einrastbereich (530) besitzt, so daß der Zapfen (63) sich bei der vollständigen Einführung der Karte (C_arte) in diesem Bereich (530) festsetzt, und daß der Mechanismus mit zwei stabilen Zuständen den ersten, verriegelten Zustand aufweist.

5. Vorrichtung nach Anspruch 4, **dadurch gekennzeichnet, daß**, wenn ein erster Druck das Einführen der Karte (C_arte) verursacht, der Zapfen (63) am ersten Zweig (50) und dann einem der seitlichen Zweig (51) entlangläuft und sich im Einrastbereich (530) in der Vertiefung im Zweig (53) positioniert, der sich im fernen Bereich befindet, so daß der Mechanismus mit zwei stabilen Zuständen den ersten, verriegelten Zustand erreicht, und daß, wenn ein zweiter Druck das Herausziehen der Karte (C_arte) bewirkt, der Zapfen (63) sich aus diesem Einrastbereich (530) löst und am zweiten seitlichen Zweig (52) und von neuem am ersten Zweig (51) in entgegengesetzter Richtung entlangläuft, bis der Mechanismus mit zwei stabilen Zuständen den zweiten, entriegelten Zustand erreicht.

6. Vorrichtung nach Anspruch 4 oder 5, **dadurch gekennzeichnet, daß** die Blattfedern (34, 35), die zu beiden Seiten des Schwingarms (6) angeordnet sind, so ausgebildet sind, daß sie, wenn der Zapfen (63) im Einrastbereich (530) in der Vertiefung des Zweigs (53) im fernen Bereich positioniert ist, über den Schwingarm (6) eine korrekte Positionierung des Wagens (3) und der von diesem getragenen Karte (C_arte) in bezug auf die Schleifkontakte (12) gewährleisten, um die Gefahren von Kurzschlüssen zu vermeiden.

7. Vorrichtung nach einem der Ansprüche 1 bis 6, **dadurch gekennzeichnet, daß** die Platte (10) außerdem mit einer zusätzlichen Blattfeder (7) für den seitlichen Halt der Karte (C_arte) ausgestattet ist.

8. Vorrichtung nach einem der Ansprüche 1 bis 7, **dadurch gekennzeichnet, daß** der bewegliche Wagen (3) außerdem einen Endanschlag (300) aufweist, der auf einem bestimmten Bereich (13) der ortsfesten Platte (10) aufliegt, um die Amplitude der Bewegung des beweglichen Wagens (3) zu begrenzen und eine Beschädigung des Schwingarms (3) zu verhindern.

9. Vorrichtung nach einem der Ansprüche 1 bis 8, **dadurch gekennzeichnet, daß** die eine Auswerffeder bildenden Mittel aus einer Schraubenfeder (4) bestehen, deren eines Ende fest mit dem Behälter (10) und deren anderes Ende fest mit dem beweglichen Wagen (3) verbunden ist.

**Claims**

1. Smart card reader comprising:

- a card guide receptacle having an orifice (100) for inserting the smart card (C_ard) and a fixed platen (10),

- brush-type members (12) intended to be brought into contact with defined conducting pads ($C_a$, $C_b$) on the said card ($C_{ard}$) when the latter is inserted into the reader (1),
- a moving carriage (3) which receives the said card ($C_{ard}$) and is driven translationally by the latter in a defined direction ($\Delta$) inside the said receptacle, parallel to the surface of the platen (10), when a thrust force is exerted on the card ($C_{ard}$) parallel to this defined direction ($\Delta$),
- a mechanism comprising means (4) forming a spring for ejecting the card ($C_{ard}$) and means (5, 6) for catching the moving carriage (3) at the end of travel when the card ($C_{ard}$) has been fully inserted, the said mechanism being designed to have two stable states, namely a locked first state reached when a first thrust force is exerted on the card ($C_{ard}$) until the latter has been fully inserted in the said direction ($\Delta$) and an unlocked second state reached when a second thrust force is exerted in this same direction ($\Delta$) and in the same sense on the fully inserted card ($C_{ard}$), this second pressing action causing the latter to be extracted from the reader (1) owing to the effect of the means (4) forming the spring,

characterized in that the said end-of-travel catching means comprise a connecting rod (6) mechanically linked at a first end to the said moving carriage (3) via a pin (62) about which the connecting rod can rotate, the latter being provided on a second end with a stud (63) intended to follow a guiding path (5), and in that the moving carriage (3) is provided with spring means (34, 35) placed so as to exert, on each side of the said connecting rod (6), selective and opposing forces orthogonal to the said defined direction ($\Delta$), in order to force the stud (63) to travel the said guiding path (5) in only one direction.

2. Smart card reader comprising:

- a card guide receptacle having an orifice (100) for inserting the smart card ($C_{ard}$) and a fixed platen (10),
- brush-type means (12) intended to be brought into contact with defined conducting pads ($C_a$, $C_b$) on the said card ($C_{ard}$) when the latter is inserted into the reader (1), the said brush-type members (12) defining a first row of contacts ($12_a$) placed along a first axis ($\Delta_a$) orthogonal to the said defined direction ($\Delta$) of movement of the moving carriage. (3) and a second row of contacts ($12_b$) placed along a second axis ($\Delta_c$) parallel to the first axis ($\Delta_a$),
- a moving carriage (3) which receives the said card ($C_{ard}$) and is driven translationally by the latter in a defined direction ($\Delta$) inside the said

receptacle, parallel to the surface of the platen (10), when a thrust force is exerted on the card ($C_{ard}$) parallel to this defined direction ($\Delta$),
- a mechanism comprising means (4) forming a spring for ejecting the card ($C_{ard}$) and means (5, 6) for catching the moving carriage (3) at the end of travel when the card ($C_{ard}$) has been fully inserted, the said mechanism having two stable states, namely a locked first state reached when a first thrust force is exerted on the card ($C_{ard}$) in the said direction ($\Delta$), until it has been fully inserted, and an unlocked second state reached when a second thrust force is exerted on the fully inserted card ($C_{ard}$), in the same direction ($\Delta$) and in the same sense, this second pressing action causing the card to be extracted from the reader (1) owing to the effect of the means (4) forming the spring,

characterized in that the said end-of-travel catching means comprise a connecting rod (6) mechanically linked at a first end to the said moving carriage (3) via a pin (62) about which it can rotate, the connecting rod being provided on its second end with a stud (63) intended to follow a guiding path (5), and in that, since an overtravel of defined amplitude "$s$" occurs upon insertion of the said card ($C_{ard}$), the said second axis ($\Delta_c$) is offset in the direction of insertion of the card, in such a way that the distance "$Da+d$" between the first and second axes is greater than the centre-to-centre spacing "$Da$" of the said conducting pads ($C_a$, $C_b$) of the card ($C_{ard}$) by an amount "$d$" proportional to the said insertion overtravel "$s$".

3. Reader according to Claim 2, characterized in that the said amount "$d$" is approximately equal to half of the said insertion overtravel "$s$" of the card ($C_{ard}$).

4. Reader according to one of Claims 1 to 3, characterized in that the said guiding path (5) is in the form of a cardioid having, in a region close to the said pin (62), a first branch (50), approximately parallel to the said defined direction ($\Delta$), which divides into first and second lateral branches (51, 52) slightly inclined with respect to this same defined direction ($\Delta$) and, in a distal region, a branch (53) which joins the two lateral branches (51, 52) and has a retention region (530) set back so that the said stud (63) catches in this region (530) when the said card ($C_{ard}$) has been fully inserted and so that the said mechanism with two stable states is in the first state called the locked state.

5. Reader according to Claim 4, characterized in that, when a first thrust force causes the said card ($C_{ard}$) to be inserted, the said stud (63) travels along the said first branch (50), then along one (51) of the said side branches and is positioned in the said retention region (530), set back from the branch (53) lying in the distal region, so that the said mechanism having two stable states reaches the locked first state, and **in that**, when a second thrust force causes the said card ($C_{ard}$) to be extracted, the said stud (63) is disengaged from this retention region (530) and travels along the second lateral branch (52) and, once again, the said first branch (50), in the opposite sense, until the said mechanism having two stable states reaches the unlocked second state.

6. Reader according to Claim 4 or 5, **characterized in that** the said leaf springs (34, 35), placed on either side of the said connecting rod (6), are designed in such a way that, when the said stud (63) is in position in the said retention region (530), set back from the branch (53) lying in the distal region, they ensure, via the connecting rod (6), that the said carriage (6) and the card ($C_{ard}$) supported by the latter are correctly positioned with respect to the said brushes (12), so as to avoid any risk of a short circuit.

7. Reader according to any one of Claims 1 to 6, **characterized in that** the said platen (10) is furthermore provided with an additional leaf spring (7) for lateral retention of the said card ($C_{ard}$).

8. Reader according to any one of Claims 1 to 7, **characterized in that** the said moving carriage (3) furthermore includes an end-of-travel stop (300) bearing on a defined region (13) of the said fixed platen (10) so as to limit the amplitude of movement of the moving carriage (3) and prevent deterioration of the said connecting rod (6).

9. Reader according to any one of Claims 1 to 8, **characterized in that** the said means forming an ejector spring consist of a coil spring (4), one end of which is fastened to the said receptacle (10) and the other end of which is fastened to the said moving carriage (3).

# FIG_1

# FIG_2

6

FIG_3a

62

60

61

FIG_3b

62   60

61   63

6

FIG_3c

61   63   60

61   6

# FIG_4

FIG_5a

Position $\mathrm{IV}_b$

FIG_5

# FIG_6